(19) Europäisches Patentamt
European Patent Office
Office européen des brevets

(11) **EP 3 338 262 B1**

(12) **EUROPÄISCHE PATENTSCHRIFT**

(45) Veröffentlichungstag und Bekanntmachung des Hinweises auf die Patenterteilung:
**30.09.2020  Patentblatt 2020/40**

(21) Anmeldenummer: **16732558.8**

(22) Anmeldetag: **20.06.2016**

(51) Int Cl.:
*G08G 1/01* (2006.01)     *G08G 1/052* (2006.01)
*H04W 4/02* (2018.01)     *H04W 64/00* (2009.01)
*H04W 88/08* (2009.01)

(86) Internationale Anmeldenummer:
**PCT/EP2016/064147**

(87) Internationale Veröffentlichungsnummer:
**WO 2017/028995 (23.02.2017 Gazette 2017/08)**

(54) **VERFAHREN ZUR ERMITTLUNG EINES STAUENDES IM STRASSENVERKEHR UND DIESBEZÜGLICHE VORRICHTUNGEN**

METHOD FOR DETERMINING A CONGESTION END IN TRAFFIC AND ASSOCIATED DEVICES

PROCÉDÉ DE DÉTERMINATION DE LA FIN D'UN EMBOUTEILLAGE DANS LA CIRCULATION ROUTIÈRE ET DISPOSITIFS ASSOCIÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.08.2015  DE 102015215914**

(43) Veröffentlichungstag der Anmeldung:
**27.06.2018  Patentblatt 2018/26**

(73) Patentinhaber: **Bayerische Motoren Werke Aktiengesellschaft**
**80809 München (DE)**

(72) Erfinder:
• **GOZALVEZ SERRANO, David**
  **80636 München (DE)**
• **REN, Zhe**
  **80997 München (DE)**

(56) Entgegenhaltungen:
**WO-A1-2013/135535        WO-A1-2014/142057**
**DE-A1-102009 047 097     US-A1- 2007 005 231**

**Beschreibung**

Die vorliegende Erfindung betrifft ein Verfahren zur Ermittlung einer Staugrenze im Straßenverkehr und diesbezügliche Vorrichtungen.

Straßenverkehrsstaus sind ein weltweit auftretendes Ärgernis, mit dem auch erhebliche volkswirtschaftliche Verluste verbunden sind.

Daher existieren seit langem Staumelde- und Stauwarnvorrichtungen und diesbezügliche Institutionen. Beispielsweise existieren Stauwarntafeln, welche auf Zufahrten zu Autobahnen vor möglichen Staus warnen, elektronische Stauwarnschildern auf Autobahnen, welche versuchen, Staus mittels geeigneter Geschwindigkeitsbegrenzungen und Hinweisschildern zu verhindern oder abzumildern oder auch Stauwarnmeldungen in Radios oder Warninformationen für Navigationssysteme.

Die DE 10 2009 047097 A1 offenbart ein Verfahren zum Bereitstellen eines selbst fahrenden Fahrzeuges auf einer Straße. Das selbstfahrende Fahrzeug ist dazu eingerichtet eine Car-to-X-Kommunikation (C2X) auszuführen. Ein beobachtendes Fahrzeug registriert die Position eines Endes eines Verkehrsstaus, um Informationen über die C2X-Kommunikation weiteren Fahrzeugen bereitzustellen. Eine Infrastrukturvorrichtung ist entlang der Straße an einer anderen Position angeordnet und ermittelt mindestens einen Parameter zu einer aktuellen Verkehrssituation und stellt diesen per C2X-Kommunikation weiteren Fahrzeugen bereit. Das selbstfahrende Fahrzeug erhält die von dem beobachtenden Fahrzeug bereitgestellten Informationen und bestimmt unter Berücksichtigung des mindestens einen bereitgestellten Parameters eine aktuelle Position des Stauendes.

Ein relativ neuer Ansatz besteht darin, mittels einer App in Smartphones Bewegungsinformationen automatisiert an einen Auswertedienst zu senden.

Dieser Dienst benötigt eine relativ hohe Akkuleistung des Smartphones, da regelmäßig Bewegungsinformationen an den Staudienstbetreiber gesendet werden müssen, um relevante Aussagen zu ermöglichen, ob ein Stau entsteht und in welchem Abschnitt er aktuell vorliegt. Es muss damit gerechnet werden, dass eine zunehmende von Nutzern ihre Bereitschaft zur Übermittlung entsprechender Daten vorsichtshalber aufgrund von datenschutzrechtlichen

Bedenken einstellt. Die Zuverlässigkeit solcher Stauerkennungsdienste würde hierunter vermutlich leiden.

Daher wäre es wünschenswert, eine Möglichkeit bereitzustellen, welche es auf zuverlässige Weise ermöglicht, Staus und deren Begrenzungen zu erkennen, dabei Akkus von Mobilfunkvorrichtungen zu schonen und zusätzlich die Privatsphäre von Mobilfunkvorrichtungsnutzern zu wahren.

Es ist Ziel der Erfindung eine Möglichkeit vorzuschlagen, welche zumindest einen Teil der im Stand der Technik bekannten Nachteile vermeidet oder zumindest vermindert.

Die Aufgabe wird erfindungsgemäß gelöst, mittels eines Verfahrens gemäß dem Hauptanspruch, sowie mittels Vorrichtungen gemäß nebengeordneten Ansprüchen.

Der Gegenstand des Hauptanspruches betrifft dabei ein Verfahren zur Ermittlung einer Staugrenze im Straßenverkehr, das Verfahren aufweisend: Bereitstellen einer Signalqualitätskarte für eine Zelle einer Basisstation eines Mobilfunksystems, wobei die Signalqualitätskarte eine Übersichtsinformation über innerhalb der Zelle auftretende Signalqualitäten aufweist; ermitteln einer Signalqualitätsinformation für jede mit der Basisstation verbundene Mobilfunkkommunikationsvorrichtung; ermitteln einer Wahrscheinlichkeitsdichtefunktion, basierend auf den ermittelten entsprechenden Signalqualitätsinformationen; ermitteln einer Stelle der Wahrscheinlichkeitsdichtefunktion mit einem Funktionsgradienten, der bezüglich einer horizontalen Funktionsachse der Wahrscheinlichkeitsdichtefunktion einem Betragswinkel von mindestens 75° entspricht, vorzugsweise einem Betragswinkel zwischen 80° und 90°, besonders bevorzugt einem Betragswinkel zwischen 85° und 90°. Dabei ist die Stelle indikativ, für eine Staugrenze in der Zelle der Basisstation. Und ermitteln eines Ortes der Staugrenze, basierend auf der ermittelten Stelle und der Signalqualitätskarte.

Die Verfahrensschritte können dabei automatisiert ausgeführt werden.

Eine Signalqualitätskarte im Sinne der Erfindung kann dabei eine Information aufweisen, welche Auskunft gibt, über jeweilige aktuelle Signalqualitäten an verschiedenen Positionen der Karte. Somit kann ein Mapping der Signalqualitäten einer Zelle einer Basisstation erfolgen. Somit kann ermöglicht werden, dass bei einem eingehenden Signal einer Mobilfunkkommunikationsvorrichtung zur Basisstation, mittels der Signalqualität dieser eingehenden Funkverbindung die Position der entsprechenden Mobilfunkkommunikationsvorrichtung exakter bestimmt werden kann, indem in der Signalqualitätskarte nachgesehen wird, an welcher Position oder an welchen Positionen in der Signalqualitätskarte die entsprechende Signalqualität des eingehenden Signales verzeichnet ist. Befindet sich die Mobilfunkkommunikationsvorrichtung in Bewegung, so kann anhand der dann auftretenden unterschiedlichen Signalqualitäten mittels eines Abgleichens mit den verzeichneten Signalqualitäten in der Signalqualitätskarte der Positionsverlauf festgestellt werden und somit die aktuelle Position noch präziser bestimmt werden.

Eine Signalqualitätsinformation im Sinne der Erfindung kann dabei eine Information sein, welche eine Aussage darüber erlaubt, mit welcher Signalqualität eine Mobilfunkkommunikationsvorrichtung sendet. Die Signalqualität kann an der Basisstation gemessen werden und somit kann aufgrund der gemessenen Signalqualität am Empfänger, also der Basisstation, auf die Signalqualität des Senders, also der Mobilfunkkommunikationsvorrichtung, geschlossen werden.

Eine Wahrscheinlichkeitsdichtefunktion im Sinne der Erfindung kann dabei eine Funktion sein, welche eine Aussage darüber erlaubt, wie verschiedene Mobilfunkkommunikationsvorrichtungen innerhalb dieser Wahrscheinlichkeitsdichtefunktion verteilt sind. Dadurch ist es möglich, Mobilfunkkommunikationsvorrichtungen zu ermitteln, welche sich mit einer bestimmten Wahrscheinlichkeit in einem Stau befinden.

Dabei weisen Signalqualitätswerte von Mobilfunkkommunikationsgeräten, welche Fahrzeugen zugehörig sind, die sich im Stau befinden, eine starke Korrelation auf, da Fahrzeuge im Stau sich nahe beieinander befinden. Diese weisen demnach auch eine hohe Auftrittswahrscheinlichkeit auf, da die Anzahl von Fahrzeugen beziehungsweise die Fahrzeugdichte innerhalb eines Staus in der Regel groß ist.

Signalqualitätswerte von Mobilfunkkommunikationsgeräten, welche Fahrzeugen zugehörig sind, die sich nicht in einem Stau befinden, weisen stattdessen keine oder nur eine geringe Korrelation auf, da der räumliche Abstand zwischen diesen Fahrzeugen größer ist. Die Auftrittswahrscheinlichkeit ist dementsprechend auch geringer, da die Anzahl von Fahrzeugen beziehungsweise die Fahrzeugdichte an einem Ort außerhalb eines Staus geringer ist.

Eine Staugrenze im Sinne der Erfindung kann dabei sowohl den Beginn als auch den Schluss eines auftretenden Verkehrsstaus beziehungsweise Verkehrsstauareals meinen.

Durch die erfindungsgemäße Lehre wird der Vorteil erreicht, dass ohne eine zusätzliche App auf einem Smartphone zu installieren, Staus mittels Mobilfunkkommunikationsvorrichtungen erkannt werden können. Ferner kann durch die erfindungsgemäße Lehre auch eine Staugrenze und somit ein Stauanfang und ein Stauende des betreffenden Staus ermittelt werden. Dies kann mittels der natürlich anfallenden Standardkommunikation zwischen einer Basisstation und sich innerhalb der Zelle der Basisstation befindlichen Mobilfunkkommunikationsvorrichtungen erfolgen, es fallen somit keine zusätzlichen Kommunikationsdaten an und es lassen sich auch nicht zusätzliche Nutzerspezifische Informationen gewinnen, wodurch die Privatsphäre von Personen nicht stärker beeinträchtigt wird, als gesetzlich vorgesehen. Dadurch, dass keine zusätzlichen Kommunikationsdaten anfallen, werden auch die Akkus der entsprechenden zu dem Stauerkennungsdienst beitragenden Mobilfunkkommunikationsvorrichtungen energiemäßig nicht stärker als üblich belastet, somit geschont. Ferner entfallen, dadurch, dass keine zusätzlichen Kommunikationsdaten anfallen, zusätzliche Transaktionskosten der Benutzer der Mobilfunkkommunikationsvorrichtungen.

Der Gegenstand des nebengeordneten Anspruches 9 betrifft dabei ein System zur Erkennung einer Staugrenze im Straßenverkehr, das System aufweisend: Eine Basisstation eines Mobilfunksystems; eine Signalmessvorrichtung und eine Signalanalysevorrichtung. Dabei ist die Basisstation dazu eingerichtet, mit der Basisstation verbundene Mobilfunkkommunikationsvorrichtungen zu betreuen und zumindest einen Teil eines an die Basisstation übermittelten Signales an die Signalmessvorrichtung zu übertragen. Die Signalmessvorrichtung ist dazu eingerichtet, eine Signalqualität eines an die Basisstation übermittelten Signales zu ermitteln und die ermittelte Signalqualität an die Signalanalysevorrichtung zu übertragen. Und dabei ist die Signalanalysevorrichtung dazu eingerichtet, ein erfindungsgemäßes Verfahren auszuführen.

Eine Basisstation im Sinne der Erfindung kann dabei eine Vorrichtung sein, welche geeignet ist, die Kommunikation von Mobilfunkkommunikationsvorrichtungen zu ermöglichen, indem sie die Mobilfunkkommunikationsvorrichtungen verwaltet und jeweils von ihnen ausgehende oder zu ihnen eingehende Verbindungen entsprechend routet, um die gewünschten Verbindungen herzustellen beziehungsweise aufrecht zu erhalten.

Eine Signalmessvorrichtung im Sinne der Erfindung kann dabei eine Vorrichtung aufweisen, welche dazu eingerichtet ist, die Signalstärke und oder Signalqualität einer eingehenden Verbindung zu ermitteln und eine entsprechende Signalqualitätsinformation bereit zu stellen.

Eine Signalanalysevorrichtung im Sinne der Erfindung kann dabei eine Vorrichtung aufweisen, welche dazu geeignet ist, eine entsprechende Signalqualitätsinformation auszuwerten und mit dieser ein entsprechendes erfindungsgemäßes Verfahren auszuführen.

Durch die erfindungsgemäße Lehre wird der Vorteil erreicht, dass dadurch, dass die Technik zur Stauerkennung verteilt außerhalb der beteiligten Mobilfunkkommunikationsvorrichtungen angeordnet ist und ohne eine zusätzliche App auf einem Smartphone zu installieren, Staus mittels Mobilfunkkommunikationsvorrichtungen erkannt werden können, mittels der natürlich anfallenden Standardkommunikation zwischen einer Basisstation und sich innerhalb der Zelle der Basisstation befindlichen Mobilfunkkommunikationsvorrichtungen, wodurch somit keine zusätzlichen Kommunikationsdaten anfallen und sich auch nicht zusätzliche Nutzerspezifische Informationen gewinnen lassen, wodurch die Privatsphäre von Personen nicht stärker beeinträchtigt wird, als gesetzlich vorgesehen. Dadurch, dass keine zusätzlichen Kommunikationsdaten anfallen, werden auch die Akkus der entsprechenden zu dem Stauerkennungsdienst beitragenden Mobilfunkkommunikationsvorrichtungen energiemäßig nicht stärker als üblich belastet, somit geschont. Ferner entfallen, dadurch, dass keine zusätzlichen Kommunikationsdaten anfallen, zusätzliche Transaktionskosten der Benutzer der Mobilfunkkommunikationsvorrichtungen.

Ferner wird dadurch der Vorteil erreicht, dass vorhandene Basisstationen nicht aufwendig nachgerüstet werden müssen.

Der Gegenstand des weiteren nebengeordneten Anspruches 11 betrifft dabei eine Basisstation für ein Mobilfunksystem. Die Basisstation weist dabei eine Signalmessvorrichtung und eine Signalanalysevorrichtung auf. Dabei ist die Signalmessvorrichtung dazu eingerichtet, eine Signalqualität eines an die Basisstation übermittelten Signales zu ermitteln und die ermittelte Signalqualität an die Signalanalysevorrichtung zu übertragen. Und dabei ist die Signalanalysevorrichtung dazu eingerichtet, ein erfindungsgemäßes Verfahren auszuführen.

Durch die erfindungsgemäße Lehre wird der Vorteil erreicht, dass dadurch, dass die Technik zur Stauerkennung in der Basisstation angeordnet ist und ohne eine zusätzliche App auf einem Smartphone zu installieren, Staus mittels Mobilfunkkommunikationsvorrichtungen erkannt werden können, mittels der natürlich anfallenden Standardkommunikation zwischen einer Basisstation und sich innerhalb der Zelle der Basisstation befindlichen Mobilfunkkommunikationsvorrichtungen, wodurch somit keine zusätzlichen Kommunikationsdaten anfallen und sich auch nicht zusätzliche Nutzerspezifische Informationen gewinnen lassen, wodurch die Privatsphäre von Personen nicht stärker beeinträchtigt wird, als gesetzlich vorgesehen. Dadurch, dass keine zusätzlichen Kommunikationsdaten anfallen, werden auch die Akkus der entsprechenden zu dem Stauerkennungsdienst beitragenden Mobilfunkkommunikationsvorrichtungen energiemäßig nicht stärker als üblich belastet, somit geschont.

Ferner entfallen, dadurch, dass keine zusätzlichen Kommunikationsdaten anfallen, zusätzliche Transaktionskosten der Benutzer der Mobilfunkkommunikationsvorrichtungen.

Dadurch, dass die Technik zur Stauerkennung in der Basisstation angeordnet ist, kann eine aktuelle Stauerkennung besonders schnell erfolgen und in die Zelle einfahrende Kraftfahrzeuge mit Mobilfunkkommunikationsvorrichtungen können besonders schnell über einen in der Nähe befindlichen Stau informiert werden.

Der Gegenstand des weiteren nebengeordneten Anspruches 13 betrifft dabei ein Computerprogrammprodukt für ein erfindungsgemäßes System und/oder für eine erfindungsgemäße Basisstation, wobei das System und/oder die Basisstation jeweils nach einem erfindungsgemäßen Verfahren betreibbar ist.

Durch die erfindungsgemäße Lehre wird der Vorteil erreicht, dass das Verfahren besonders effizient automatisiert ausgeführt werden kann.

Der Gegenstand des weiteren nebengeordneten Anspruches 14 betrifft dabei einen Datenträger aufweisend ein erfindungsgemäßes Computerprogrammprodukt.

Durch die erfindungsgemäße Lehre wird der Vorteil erreicht, dass das Verfahren besonders effizient auf die das Verfahren ausführenden Vorrichtungen und/oder Systeme verteilt beziehungsweise vorgehalten werden kann.

Bevor nachfolgend Ausgestaltungen der Erfindung eingehender beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit in der Beschreibung und den Ansprüchen der Singular verwendet wird ist dabei jeweils der Plural mit umfasst, soweit der Kontext dies nicht explizit ausschließt. Etwaige Verfahrensschritte können, soweit der Kontext dies nicht explizit ausschließt, automatisiert ausgeführt werden.

Nachfolgend werden weitere exemplarische Ausgestaltungen des erfindungsgemäßen Verfahrens erläutert.

Entsprechend einer ersten exemplarischen Ausgestaltung weist das Verfahren ferner auf, dass das Ermitteln der Signalqualitätsinformation für jede mit der Basisstation verbundenen Mobilfunkkommunikationsvorrichtung, basierend auf einem entsprechenden Reference Signal Receive Power und/oder basierend auf einem entsprechenden Sounding Reference Signal der entsprechenden Mobilfunkkommunikationsvorrichtung erfolgt.

Ein Reference Signal Receive Power im Sinne der Erfindung kann dabei der Durchschnitt des linearen Leistungsbetrages der Ressource Elements sein, welche die zellspezifischen Referenzsignale innerhalb der betrachteten und definierten Messfrequenzbandbreite erzielen. Hierzu kann in der Regel das zellspezifische Referenzsignal R0 nach 3GPP "TS 36.211" verwendet werden.

Ein Sounding Reference Signal im Sinne der Erfindung kann dabei ein Referenzsignal sein, um die Kanalqualität eines Uplink-Pfades für jede Untersektion oder Frequenzregion festzustellen.

Diese Ausgestaltung weist den Vorteil auf, dass keine zusätzliche Informationen zu denen, die für den Betrieb des Mobilfunknetzes notwendig sind, ausgetauscht werden müssen, um die Signalqualität zu messen. Demzufolge entsteht kein zusätzlicher Energiebedarf in der Mobilfunkkommunikationsvorrichtung und es entstehen ferner keine zusätzlichen Datenkosten für den Benutzer der Mobilfunkkommunikationsvorrichtung.

Entsprechend einer weiteren exemplarischen Ausgestaltung weist das Verfahren ferner auf: Ermitteln von im Stau befindlichen Mobilfunkkommunikationsvorrichtungen, basierend auf einer Auswahl aus einer Stauermittlungsgruppe, wobei die Stauermittlungsgruppe aufweist: Die ermittelten Signalqualitätsinformationen, die bereitgestellte Signalqualitätskarte, eine Bewegungsrichtungsinformation für jede mit der Basisstation verbundene Mobilfunkkommunikationsvorrichtung und eine Bewegungsgeschwindigkeitsinformation für jede mit der Basisstation verbundene Mobilfunkkommunikationsvorrichtung. Und dabei erfolgt das Ermitteln der Wahrscheinlichkeitsdichtefunktion basierend auf den im Stau befindlichen Mobilfunkkommunikationsvorrichtungen.

Eine im Stau befindliche Mobilfunkkommunikationsvorrichtung im Sinne der Erfindung kann dabei eine Mobilfunkkommunikationsvorrichtung sein, welche sich in einem Verkehrsstau befindet. Ein Mobilfunkkommunikationsvorrichtung welche sich in räumlicher Nähe mit anderen Mobilfunkkommunikationsvorrichtungen auf einer Straße befindet und sich dabei in einem entsprechend großen Zeitintervall nicht oder nur langsam seine Position ändert, kann als im Stau befindlich aufgefasst werden.

Diese Ausgestaltung weist den Vorteil auf, dass ein Stau beziehungsweise ein Stauanfang und/oder eine Staugrenze für jede Zelle eines zellularen Mobilfunknetzwerkes bestimmt werden kann, wodurch die Vorhersagepräzision beziehungsweise Bestimmungspräzision erhöht werden kann.

Entsprechend einer weiteren exemplarischen Ausgestaltung weist das Verfahren ferner auf, dass jede Signalqualitätsinformation einer jeden mit der Basisstation verbundenen Mobilfunkkommunikationsvorrichtung eine Information bezüglich einer Signalqualität in einem Zeitintervall aufweist.

Ein Zeitintervall im Sinne der Erfindung kann dabei ein entsprechend langer und abgeschlossener, konstanter Zeitraum sein.

Diese Ausgestaltung weist den Vorteil auf, dass entsprechende Intervalle festgelegt werden können, wodurch eine Vorhersage beziehungsweise Bestimmung eines Stauareals präziser und dynamischer erfolgen kann.

Entsprechend einer weiteren exemplarischen Ausgestaltung weist das Verfahren ferner auf, dass das Zeitintervall für alle entsprechenden Mobilfunkkommunikationsvorrichtungen identisch ist.

Diese Ausgestaltung weist den Vorteil auf, dass die präzisere und dynamische Vorhersage beziehungsweise Bestimmung eines Stauareals auf einfachere Weise erfolgen kann, da durch feste Intervalle für alle Mobilfunkkommunikationsvorrichtungen in einer Zelle, die Rechenkomplexität verringert werden kann.

Entsprechend einer weiteren exemplarischen Ausgestaltung weist das Verfahren ferner auf, dass das Bereitstellen der Signalqualitätskarte für die Zelle der Basisstation des Mobilfunksystems aufweist: Ermitteln der Signalqualitätskarte basierend auf einem Gain eines Kanales des Mobilfunksystems und/oder basierend auf empfangenen Signalqualitätsinformationen entsprechender mit der Basisstation verbundener Mobilfunkkommunikationsvorrichtungen, jeweils in Abhängigkeit eines Ortes innerhalb der Zelle der Basisstation.

Diese Ausgestaltung weist den Vorteil auf, dass die Signalqualitätskarte dynamisch ermittelbar wird.

Entsprechend einer weiteren exemplarischen Ausgestaltung weist das Verfahren ferner ein Ermitteln der Bewegungsrichtungsinformation für jede mit der Basisstation verbundene Mobilfunkkommunikationsvorrichtung auf. Dabei weist jede entsprechende Bewegungsrichtungsinformation eine Information über eine Bewegungsrichtung der entsprechenden Mobilfunkkommunikationsvorrichtung auf. Und das Ermitteln der Bewegungsrichtungsinformation für jede mit der Basisstation verbundene Mobilfunkkommunikationsvorrichtung erfolgt basierend auf der Signalqualitätskarte. Und dabei erfolgt das Ermitteln von örtlich nahe beieinander befindlichen Mobilfunkkommunikationsvorrichtungen zusätzlich basierend auf den ermittelten Bewegungsrichtungsinformation.

Diese Ausgestaltung weist den Vorteil auf, dass die Vorhersage beziehungsweise Bestimmung eines Staus noch präziser erfolgen kann, da somit ermittelt werden kann, in welcher Fahrrichtung ein Stau entsteht oder vorhanden ist.

Entsprechend einer weiteren exemplarischen Ausgestaltung weist das Verfahren ferner ein Ermitteln der Bewegungsgeschwindigkeitsinformation für jede mit der Basisstation verbundene Mobilfunkkommunikationsvorrichtung auf. Dabei weist jede entsprechende Bewegungsgeschwindigkeitsinformation eine Information über eine Bewegungsgeschwindigkeit der entsprechenden Mobilfunkkommunikationsvorrichtung auf. Und dabei erfolgt das Ermitteln der Bewegungsgeschwindigkeitsinformation für jede mit der Basisstation verbundene Mobilfunkkommunikationsvorrichtung, basierend auf einer entsprechenden Dopplerverschiebung, eines von der entsprechenden Mobilfunkkommunikationsvorrichtung gesendeten entsprechenden Signales an die Basisstation.

Diese Ausgestaltung weist den Vorteil auf, dass die Vorhersage beziehungsweise Bestimmung eines Staus noch präziser erfolgen kann, da somit ermittelt werden kann, in welcher Fahrrichtung ein Stau entsteht oder vorhanden ist.

Ferner weist sie den Vorteil auf, dass die Fahrrichtung eines Kraftfahrzeuges mit einer entsprechenden Mobilfunkkommunikationsvorrichtung an Bord auf einfache Weise ermittelt werden kann.

Entsprechend einer ersten exemplarischen Ausgestaltung weist die Basisstation ferner eine Geschwindigkeitsermittlungsvorrichtung auf, zur Ermittlung einer Bewegungsgeschwindigkeit, für jede mit der Basisstation verbundene Mobilfunkkommunikationsvorrichtung.

Diese Ausgestaltung weist den Vorteil auf, dass die Vorhersage beziehungsweise Bestimmung eines Staus noch präziser erfolgen kann, da somit ermittelt werden kann, in welcher Fahrrichtung ein Stau entsteht oder vorhanden ist.

Ein weiterer Vorteil ist, dass noch präziser bestimmt werden kann, ob sich ein Fahrzeug in einem Stau befindet, da Fahrzeuge, welche sich mit hoher Geschwindigkeit fortbewegen, sich nicht in einem Stau befinden können.

Die Erfindung erlaubt es somit sehr präzise Stauareale zu bestimmen, indem innerhalb einer Zelle eines zellularen Mobilfunknetzwerkes gesendete Standardinformationen von darin befindlichen Mobilfunkkommunikationsvorrichtungen entsprechend ausgewertet werden.

Die Erfindung wird nachfolgend eingehender an Hand der Figuren erläutert werden. In diesen zeigen:

Fig. 1 eine schematische Darstellung eines vorgeschlagenen Verfahrens gemäß einer beispielhaften Ausgestaltung der Erfindung;

Fig. 2 eine schematische Darstellung eines vorgeschlagenen Verfahrens gemäß einer weiteren beispielhaften Ausgestaltung der Erfindung;

Fig. 3 eine schematische Darstellung eines vorgeschlagenen Verfahrens gemäß einer weiteren beispielhaften Ausgestaltung der Erfindung;

Fig. 4 eine schematische Darstellung eines Teiles eines vorgeschlagenen Verfahrens gemäß einer weiteren beispielhaften Ausgestaltung der Erfindung;

Fig. 5 eine schematische Darstellung eines vorgeschlagenen Systems gemäß einer beispielhaften Ausgestaltung der Erfindung;

Fig. 6 eine schematische Darstellung eines vorgeschlagenen Systems gemäß einer weiteren beispielhaften Ausgestaltung der Erfindung;

Fig. 7 eine schematische Darstellung einer vorgeschlagenen Vorrichtung gemäß einer beispielhaften Ausgestaltung der Erfindung; und

Fig. 8 eine schematische Darstellung einer vorgeschlagenen Vorrichtung gemäß einer weiteren beispielhaften Ausgestaltung der Erfindung.

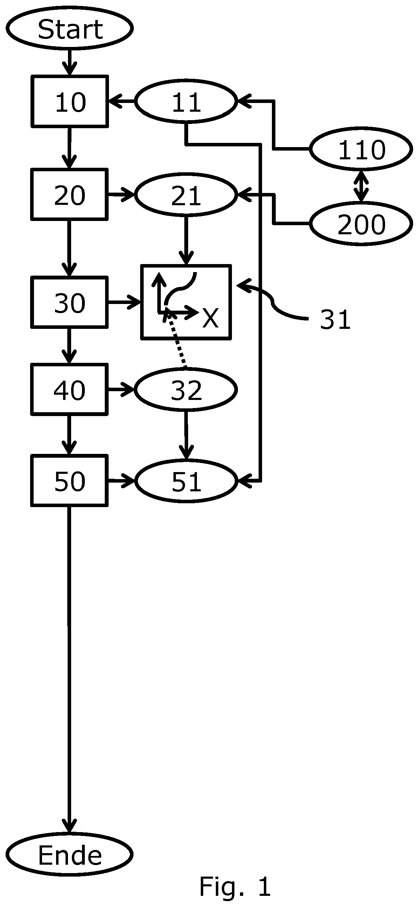

Fig. 1 zeigt eine schematische Darstellung eines vorgeschlagenen Verfahrens gemäß einer beispielhaften Ausgestaltung der Erfindung.

Dabei zeigt Fig. 1 eine schematische Darstellung eines Verfahrens zur Ermittlung einer Staugrenze im Straßenverkehr, das Verfahren aufweisend: Bereitstellen 10 einer Signalqualitätskarte 11 für eine Zelle einer Basisstation 110 eines Mobilfunksystems, wobei die Signalqualitätskarte 11 eine Übersichtsinformation über innerhalb der Zelle auftretende Signalqualitäten aufweist. Ermitteln 20 einer Signalqualitätsinformation 21 für jede mit der Basisstation 110 verbundenen Mobilfunkkommunikationsvorrichtung 200. Ermitteln 30 einer Wahrscheinlichkeitsdichtefunktion 31, basierend auf den ermittelten entsprechenden Signalqualitätsinformationen 21. Ermitteln 40 einer Stelle 32 der Wahrscheinlichkeitsdichtefunktion 31 mit einem Funktionsgradienten, der bezüglich einer horizontalen Funktionsachse X der Wahrscheinlichkeitsdichtefunktion einem Betragswinkel von mindestens 75° entspricht, vorzugsweise einem Betragswinkel zwischen 80° und 90°, besonders bevorzugt einem Betragswinkel zwischen 85° und 90°. Dabei ist die Stelle 32 indikativ für eine Staugrenze in der Zelle der Basisstation. Und ferner weist das Verfahren ein Ermitteln 50 eines Ortes 51 der Staugrenze auf, basierend auf der ermittelten Stelle 32 und der Signalqualitätskarte 11. Der Betragswinkel sollte entsprechend einem Intervall auf der Funktionsachse X und Y berechnet werden. In dem Fall, dass die Signalqualitätsinformation in dB angegeben werden kann, könnte der Betragswinkel beispielsweise entsprechend einem Intervall von 1 dB auf der Funktionsachse X und von 2% auf der Funktionsachse Y berechnet werden.

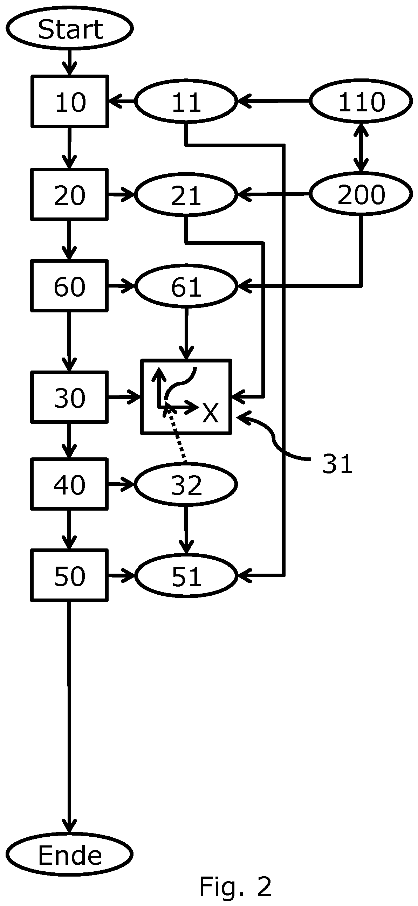

Fig. 2 zeigt eine schematische Darstellung eines vorgeschlagenen Verfahrens gemäß einer weiteren beispielhaften Ausgestaltung der Erfindung.

Dabei zeigt Fig. 2 eine schematische Darstellung eines gegenüber des Verfahrens aus Fig.1 erweiterten Verfahrens. Das zuvor zu Fig. 1 Gesagte gilt entsprechend für Fig. 2 fort.

Wie Fig. 2 entnommen werden kann, weist das Verfahren zur Ermittlung einer Staugrenze im Straßenverkehr ferner auf: Ermitteln 60 von im Stau 61 befindlichen Mobilfunkkommunikationsvorrichtungen 200, basierend auf einer Auswahl aus einer Stauermittlungsgruppe, wobei die Stauermittlungsgruppe aufweist: Die ermittelten Signalqualitätsinformationen 21, die bereitgestellte Signalqualitätskarte 11, eine Bewegungsrichtungsinformation 71 für jede mit der Basisstation 110 verbundene Mobilfunkkommunikationsvorrichtung 200 und eine Bewegungsgeschwindigkeitsinformation 81 für jede mit der Basisstation 110 verbundene Mobilfunkkommunikationsvorrichtung 200. Und dabei erfolgt das Ermitteln 30 der Wahrscheinlichkeitsdichtefunktion 31 basierend auf den im Stau 61 befindlichen Mobilfunkkommunikationsvorrichtungen 200.

Dabei erfolgt das Ermitteln der Signalqualitätsinformation 21 für jede mit der Basisstation 110 verbundenen Mobilfunkkommunikationsvorrichtung 200, basierend auf einem entsprechenden Reference Signal Receive Power und/oder basierend auf einem entsprechenden Sounding Reference Signal der entsprechenden Mobilfunkkommunikationsvorrichtung 200.

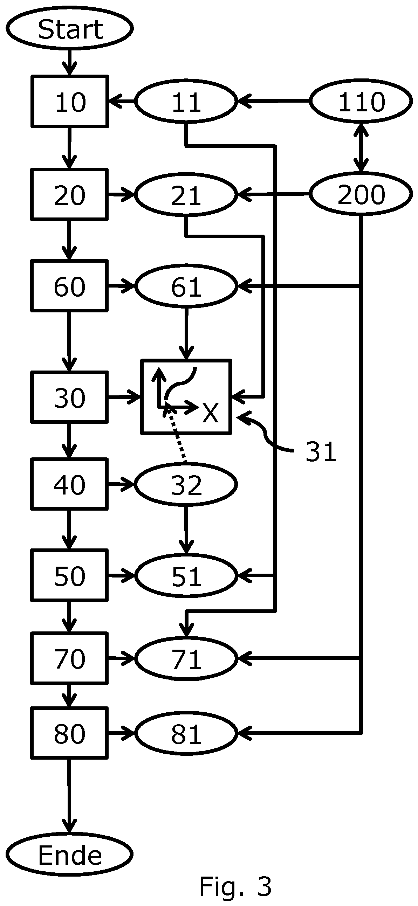

Fig. 3 zeigt eine schematische Darstellung eines vorgeschlagenen Verfahrens gemäß einer weiteren beispielhaften Ausgestaltung der Erfindung.

Dabei zeigt Fig. 3 eine schematische Darstellung eines gegenüber des Verfahrens aus Fig. 1 und Fig. 2 erweiterten Verfahrens. Das zuvor zu Fig. 1 und Fig. 2 Gesagte gilt entsprechend für Fig. 3 fort.

Wie Fig. 3 entnommen werden kann, weist das Verfahren zur Ermittlung einer Staugrenze im Straßenverkehr ferner auf: Ermitteln 70 der Bewegungsrichtungsinformation 71 für jede mit der Basisstation 110 verbundene Mobilfunkkommunikationsvorrichtung 200. Dabei weist jede entsprechende Bewegungsrichtungsinformation 71 eine Information über eine Bewegungsrichtung der entsprechenden Mobilfunkkommunikationsvorrichtung 200 auf. Und das Ermitteln der Bewegungsrichtungsinformation 71 für jede mit der Basisstation 110 verbundene Mobilfunkkommunikationsvorrichtung 200 erfolgt basierend auf der Signalqualitätskarte 11. Und dabei erfolgt das Ermitteln von örtlich nahe beieinander befindlichen Mobilfunkkommunikationsvorrichtungen 200 zusätzlich basierend auf den ermittelten Bewegungsrichtungsinformation 71.

Dabei weist jede Signalqualitätsinformation 21 einer jeden mit der Basisstation 110 verbundenen Mobilfunkkommunikationsvorrichtung 200 eine Information bezüglich einer Signalqualität in einem Zeitintervall auf. Dabei kann das Zeitintervall für alle entsprechenden Mobilfunkkommunikationsvorrichtungen 200 identisch sein.

Ferner weist das Verfahren zur Ermittlung einer Staugrenze im Straßenverkehr der Fig. 3 auf: Ermitteln 80 der Bewegungsgeschwindigkeitsinformation 81 für jede mit der Basisstation 110 verbundene Mobilfunkkommunikationsvorrichtung 200, wobei jede entsprechende Bewegungsgeschwindigkeitsinformation 81 eine Information über eine Bewegungsgeschwindigkeit der entsprechenden Mobilfunkkommunikationsvorrichtung 200 aufweist. Und dabei erfolgt das Ermitteln der Bewegungsgeschwindigkeitsinformation 81 für jede mit der Basisstation verbundene Mobilfunkkommunikationsvorrichtung, basierend auf einer entsprechenden Dopplerverschiebung, eines von der entsprechenden Mobilfunkkommunikationsvorrichtung gesendeten entsprechenden Signales an die Basisstation.

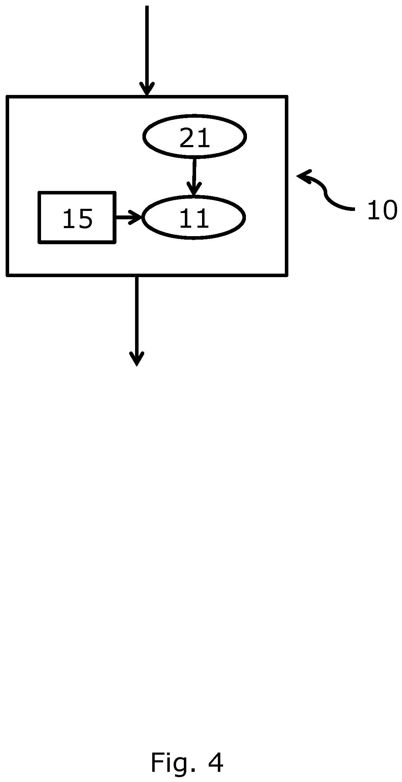

Fig. 4 zeigt eine schematische Darstellung eines Teiles eines vorgeschlagenen Verfahrens gemäß einer weiteren beispielhaften Ausgestaltung der Erfindung.

Dabei zeigt Fig. 4 eine schematische Darstellung eines gegenüber des Verfahrens der Fig. 1 bis 3 erweiterten Verfahrens. Der Übersicht halber ist jedoch nur der erweiterte Teil des Verfahrens in Fig. 4 dargestellt.

Wie Fig. 4 entnommen werden kann, weist das Verfahren zur Ermittlung einer Staugrenze im Straßenverkehr darüber hinaus auf, dass das Bereitstellen 10 der Signalqualitätskarte 11 für die Zelle der Basisstation 110 des Mobilfunksystems aufweist: Ermitteln 15 der Signalqualitätskarte 11 basierend auf einem Gain eines Kanales des Mobilfunksystems und/oder basierend auf empfangenen Signalqualitätsinformationen 21 entsprechender mit der Basisstation 110 verbundener Mobilfunkkommunikationsvorrichtungen 200, jeweils in Abhängigkeit eines Ortes innerhalb der Zelle der Basisstation 110.

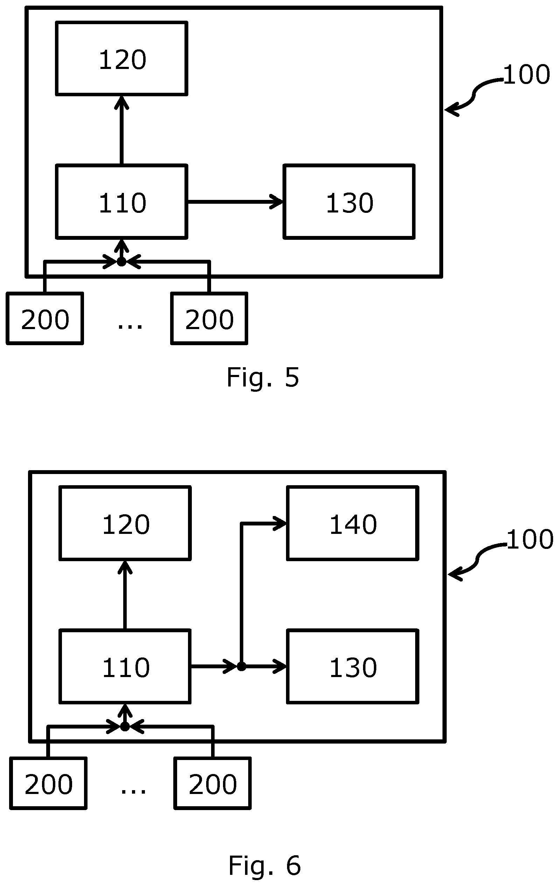

Fig. 5 zeigt eine schematische Darstellung eines vorgeschlagenen Systems gemäß einer beispielhaften Ausgestaltung der Erfindung.

Dabei zeigt Fig. 5 eine schematische Darstellung eines Systems 100 zur Erkennung einer Staugrenze im Straßenverkehr, wobei das System aufweist: Eine Basisstation 110 eines Mobilfunksystems, eine Signalmessvorrichtung 120 und eine Signalanalysevorrichtung 130 dabei ist die Basisstation 110 dazu eingerichtet, mit der Basisstation 110 verbundene Mobilfunkkommunikationsvorrichtungen 200 zu betreuen und zumindest einen Teil eines an die Basisstation 110 übermittelten Signales an die Signalmessvorrichtung 120 zu übertragen. Die Signalmessvorrichtung 120 ist dazu eingerichtet eine Signalqualität eines an die Basisstation 110 übermittelten Signales zu ermitteln und die ermittelte Signalqualität an die Signalanalysevorrichtung 130 zu übertragen. Und dabei ist die Signalanalysevorrichtung 130 dazu eingerichtet, ein erfindungsgemäßes Verfahren auszuführen.

Fig. 6 zeigt eine schematische Darstellung eines vorgeschlagenen Systems gemäß einer weiteren beispielhaften Ausgestaltung der Erfindung.

Dabei zeigt Fig. 6 eine schematische Darstellung eines gegenüber des Systems der Fig. 5 erweiterten Systems.

Wie Fig. 6 entnommen werden kann, weist das System 100 zur Erkennung einer Staugrenze im Straßenverkehr ferner eine Geschwindigkeitsermittlungsvorrichtung 140 auf, zur Ermittlung einer Bewegungsgeschwindigkeit, für jede mit der Basisstation 110 verbundene Mobilfunkkommunikationsvorrichtung 200.

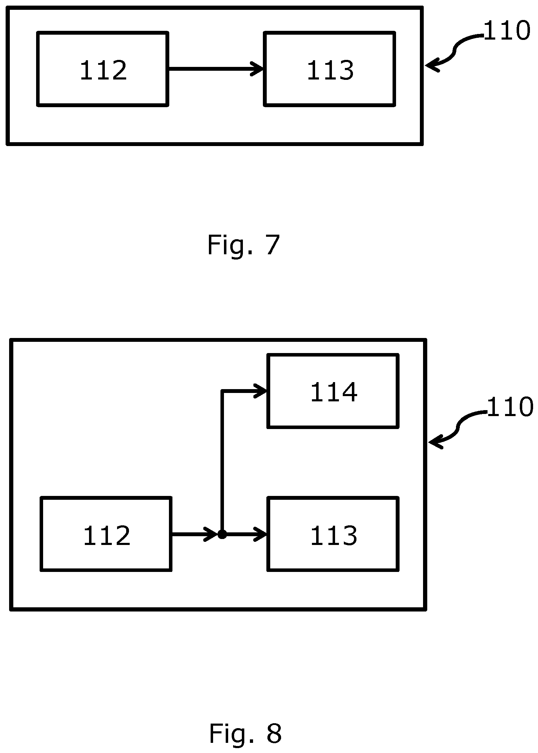

Fig. 7 zeigt eine schematische Darstellung einer vorgeschlagenen Vorrichtung gemäß einer beispielhaften Ausgestaltung der Erfindung.

Dabei zeigt Fig. 7 eine erfindungsgemäße Basisstation 110 für ein Mobilfunksystem, die Basisstation 110 aufweisend: Eine Signalmessvorrichtung 112 und eine Signalanalysevorrichtung 113. Dabei ist die Signalmessvorrichtung 112 dazu eingerichtet, eine Signalqualität eines an die Basisstation 110 übermittelten Signales zu ermitteln und die ermittelte Signalqualität an die Signalanalysevorrichtung 113 zu übertragen. Und dabei ist die Signalanalysevorrichtung 113 dazu eingerichtet, ein erfindungsgemäßes Verfahren auszuführen.

Fig. 8 zeigt eine schematische Darstellung einer vorgeschlagenen Vorrichtung gemäß einer weiteren beispielhaften Ausgestaltung der Erfindung.

Dabei zeigt Fig. 8 eine schematische Darstellung einer gegenüber der Vorrichtung der Fig. 5 erweiterten Vorrichtung.

Dabei zeigt Fig. 8 eine erfindungsgemäße Basisstation 110, die ferner eine Geschwindigkeitsermittlungsvorrichtung 114 aufweist, zur Ermittlung einer Bewegungsgeschwindigkeit, für jede mit der Basisstation 110 verbundene Mobilfunkkommunikationsvorrichtung 200.

Zusammenfassend kann für das System 100 und/oder die Basisstation 110 in Verbindung mit einem erfindungsgemäßen Verfahren festgehalten werden: Die Signalanalysevorrichtung 113 ist dazu eingerichtet, mittels eines erfindungsgemäßen Verfahrens einen Stauanfang beziehungsweise ein Stauende innerhalb des Abdeckungsgebietes der Basisstation 110 zu erkennen. Beispielsweise ist es möglich, die Anzahl und Bewegungsgeschwindigkeit der mit der Basisstation 110 verbundenen Mobilfunkkommunikationsvorrichtungen 200 zu bestimmen und mittels dieser Informationen das Vorhandensein eines Staus innerhalb des Abdeckungsbereiches der Basisstation 110 zu erkennen. Mittels der ermittelten Signalqualitäten können Signalqualitätsinformationen 21 bezüglich der entsprechenden Mobilfunkkommunikationsvorrichtungen 200 bestimmt werden. Somit wird es ferner möglich, mittels eines Abgleichens dieser Informationen mit einer vorberechneten Signalqualitätskarte 11 einen Stauanfang und/oder ein Stauende zu erkennen.

Die Signalanalysevorrichtung 113 und/oder Basisstation 110 kann somit dazu eingerichtet sein, einen Pool aus statistischen Informationen zu kreieren und/oder aktuell vorzuhalten, aus dem die Signalqualitätskarte 11 erstellt werden kann. Dieser Pool kann aus Informationen bestehen, welche, für die mit der Basisstation 110 verbundenen Mobilfunkkommunikationsvorrichtungen 200, das Bestimmen entsprechender Signalqualitätsinformationen 21 ermöglicht. Ferner können mittels dieses Pools auch die Bewegungsrichtungen der mit der Basisstation 110 verbundenen Mobilfunkkommunikationsvorrichtungen 200 bestimmt werden.

Eine Möglichkeit die Signalqualitätskarte 11 zu bestimmen ist die Durchführung eines Testbetriebes mit einer entsprechend hohen Anzahl an Testpositionen innerhalb des Abdeckungsgebietes der Basisstation 110, bei dem die jeweiligen Signalqualitäten für die entsprechenden Testpositionen ermittelt werden.

Eine weitere Möglichkeit ist die Nutzung diverser Software-Tools, welche es erlauben die Signalqualitäten innerhalb des Abdeckungsgebietes der Basisstation 110 realitätsnah zu modellieren.

Die Signalqualitätskarte 11 kann wie nachfolgend beschrieben erhalten werden:

$$y = f(x),$$

wobei y dem Kanalgewinn - auch Gain genannt - beziehungsweise der empfangenen Signalstärke - beispielsweise in dB - entspricht und wobei x Positionen innerhalb des Abdeckungsgebietes der Basisstation 110 entspricht. x kann dabei als ein zu vergleichendes Skalar interpretiert werden, welches mittels eines Vergleiches mit einem weiteren solchen Skalar eine Bewegungsrichtung anzeigen kann. Dabei wird an den Rändern des Abdeckungsgebietes der Basisstation 110 angenommen, dass gilt: 0=f(0).

Eine weitere Aufgabe der Signalanalysevorrichtung 113 ist es, die Verteilung von in ermittelten Signalqualitätsinformationen 21 auf der Signalqualitätskarte 11 zu bestimmen. Dabei kann die Ermittlung der Signalqualitätsinformationen 21 in Echtzeit erfolgen. Damit ist es möglich, einen Stauanfang und/oder ein Stauende innerhalb des Abdeckungsgebietes der Basisstation 110 zu bestimmen.

Ein algorithmisches Beispiel dafür ist nachfolgend beschrieben:
Zunächst wird beispielsweise angenommen, dass ein Verkehrsstau an einem Rand des Abdeckungsgebietes der Basisstation 110 beginnt und irgendwo innerhalb des Abdeckungsgebietes der Basisstation 110 endet.

Dabei entsprechen die ermittelten Signalqualitätsinformationen 21 der Mobilfunkkommunikationsvorrichtungen 200 Kraftfahrzeugen innerhalb des Abdeckungsgebietes der Basisstation 110 zu einem Zeitpunkt

t, mit:

$$y(t) = [y1(t), y2(t), ....],$$

wobei der Index von y den Fahrzeug-IDs entspricht.

Daraus ergeben sich eine Reihe von Vektoren, welche Informationen von Kraftfahrzeugen aufweisen, die sich innerhalb des Abdeckungsgebietes der Basisstation 110 befinden.

Damit kann eine Wahrscheinlichkeitsdichtefunktion pyt(y) aller Messungen innerhalb eines Zeitintervalls [t0, t1] berechnet werden.

Berechne die Wahrscheinlichkeitsdichtefunktion der Funktion f(x) als pf(y).

Berechne den Hochfrequenzteil der Wahrscheinlichkeitsdichtefunktion:

$$ph(y) = pyt(y) - k * pf(y),$$

wobei k ein Faktor ist, der einem Niederfrequenzteil von pyt(y) mit pf(y) entspricht.

Ein praktische Möglichkeit zur Berechnung ist:

$$k = \frac{1}{a} \int_0^a \frac{p_{yt}(y)}{p_f(y)} \, dy$$

Diese Filterung kann zur Entfernung derjenigen Messwerte vorgenommen werden, welche Kraftfahrzeugen entsprechen, die sich nicht im Stau befinden. Dabei können von der Filterung auch vereinzelt Kraftfahrzeuge betroffen sein, welche sich im Stau befinden. Somit verbleiben jedoch nur Kraftfahrzeuge, welche sich im Stau befinden.

Daraus ergeben sich Muster für ph(y), für die jeweils eine Staugrenze, also Stauanfang/Stauende, bestimmt werden kann, bei der gilt: f(x) = y0. Dies bezeichnet einen Punkt der Funktion ph(y) bei der die Steigung der Funktionskurve von ph(y) abrupt zunimmt, somit mindestens 75° entspricht. Besonders bevorzugt entspricht diese Steigung zwischen 80 und 90°.

Die Erfindungsidee kann wie folgt zusammengefasst werden. Es werden ein Verfahren, ein System und eine diesbezügliche Vorrichtung bereitgestellt, wodurch es möglich werden kann, ein Stauareal entlang einer Verkehrsstraße zu bestimmen. Dazu werden von Mobilfunkkommunikationsvorrichtungen, welche sich an Bord von Fahrzeugen befinden, an eine mit diesen Mobilfunkkommunikationsvorrichtungen verbundene Basisstation standardmäßig gesendete Daten genutzt, um Fahrzeuge zu bestimmen, welche sich in einem Stau befinden. Anhand einer daraus entstehenden Wahrscheinlichkeitsdichtefunktion kann dann auf ein Ende eines Staus geschlossen werden. Dadurch kann ein Stauareal mit den Stau begrenzenden Staubeginn und Stauabschluss ermittelt und somit insbesondere ein Stauanfang bestimmt werden. Diese Daten können an entsprechende Kraftfahrzeuge und/oder Stauwarnsysteme weitergeleitet werden, um insbesondere Kraftfahrzeuge, welche sich noch nicht im Stau befinden, zu warnen und ihnen zeitnah und aktuell Ausweichrouten anbieten zu können.

Wird entlang einer Verkehrsstraße in dem Bereich einer Basisstation ein Stau, jedoch keine Staugrenze ermittelt, so kann daraus geschlossen werden, dass der Verkehr entlang dieser Verkehrstrasse im Abdeckungsbereich der Basisstation vollständig im Stau liegt. Die Staugrenze kann dann in einer weiteren Basisstation gesucht beziehungsweise ermittelt werden. Dadurch kann basisstationsübergreifend ein Stauareal entlang der betreffenden Verkehrsstraße ermittelt werden.

**Bezugszeichenliste**

| | |
|---|---|
| 10 | Bereitstellen einer Signalqualitätskarte |
| 11 | Signalqualitätskarte |
| 20 | ermitteln einer Signalqualitätsinformation |
| 21 | Signalqualitätsinformation |
| 30 | ermitteln einer Wahrscheinlichkeitsdichtefunktion |
| 31 | Wahrscheinlichkeitsdichtefunktion |
| 32 | Stelle der Wahrscheinlichkeitsdichtefunktion |
| 40 | ermitteln einer Stelle der Wahrscheinlichkeitsdichtefunktion |
| 50 | ermitteln eines Ortes der Staugrenze |
| 51 | Ort der Staugrenze |
| 60 | ermitteln von im Stau befindlichen Mobilfunkkommunikationsvorrichtungen |
| 61 | im Stau befindliche Mobilfunkkommunikationsvorrichtung |
| 70 | Ermitteln der Bewegungsrichtungsinformation |
| 71 | Bewegungsrichtungsinformation |
| 80 | Ermitteln der Bewegungsgeschwindigkeitsinformation |
| 81 | Bewegungsgeschwindigkeitsinformation |
| 100 | System zur Erkennung einer Staugrenze |
| 110 | Basisstation |
| 112 | Signalmessvorrichtung |
| 113 | Signalanalysevorrichtung |
| 114 | Geschwindigkeitsermittlungsvorrichtung |
| 120 | Signalmessvorrichtung |
| 130 | Signalanalysevorrichtung |
| 140 | Geschwindigkeitsermittlungsvorrichtung |
| 200 | Mobilfunkkommunikationsvorrichtung |
| X | horizontale Funktionsachse der Wahrscheinlichkeitsdichtefunktion |

**Patentansprüche**

1. Ein Verfahren zur Ermittlung einer Staugrenze im Straßenverkehr, das Verfahren aufweisend:

- Bereitstellen (10) einer Signalqualitätskarte (11) für eine Zelle einer Basisstation (110) eines Mobilfunksystems, wobei die Signalqualitätskarte (11) eine Übersichtsinformation über innerhalb der Zelle auftretende Signalqualitäten aufweist,
- ermitteln (20) einer Signalqualitätsinformation (21) für jede mit der Basisstation (110) verbundene Mobilfunkkommunikationsvorrichtung (200),
- ermitteln (30) einer Wahrscheinlichkeitsdichtefunktion (31), basierend auf den ermittelten entsprechenden Signalqualitätsinformationen (21),
- ermitteln (40) einer Stelle (32) der Wahrscheinlichkeitsdichtefunktion (31) mit einem Funktionsgradienten, der bezüglich einer horizontalen Funktionsachse (X) der Wahrscheinlichkeitsdichtefunktion einem Betragswinkel von mindestens 75° entspricht, vorzugsweise einem Betragswinkel zwischen 80° und 90°, besonders bevorzugt einem Betragswinkel zwischen 85° und 90°, wobei die Stelle (32) indikativ ist, für eine Staugrenze in der Zelle der Basisstation, und
- ermitteln (50) eines Ortes (51) der Staugrenze, basierend auf der ermittelten Stelle (32) und der Signalqualitätskarte (11).

2. Das Verfahren gemäß Anspruch 1, wobei das Ermitteln der Signalqualitätsinformation (21) für jede mit der Basisstation (110) verbundenen Mobilfunkkommunikationsvorrichtung (200), basierend auf einem entsprechenden Reference Signal Receive Power und/oder basierend auf einem entsprechenden Sounding Reference Signal der entsprechenden Mobilfunkkommunikationsvorrichtung (200) erfolgt.

3. Das Verfahren gemäß Anspruch 1 oder 2, das Verfahren ferner aufweisend:

- ermitteln (60) von im Stau (61) befindlichen Mobilfunkkommunikationsvorrichtungen (200), basierend auf einer Auswahl aus einer Stauermittlungsgruppe, wobei die Stauermittlungsgruppe aufweist:

- die ermittelten Signalqualitätsinformationen (21),
- die bereitgestellte Signalqualitätskarte (11),
- eine Bewegungsrichtungsinformation (71) für jede mit der Basisstation (110) verbundene Mobilfunkkommunikationsvorrichtung (200), und
- eine Bewegungsgeschwindigkeitsinformation (81) für jede mit der Basisstation

(110) verbundene Mobilfunkkommunikationsvorrichtung (200), und

wobei das Ermitteln (30) der Wahrscheinlichkeitsdichtefunktion (31) basierend auf den im Stau (61) befindlichen Mobilfunkkommunikationsvorrichtungen (200) erfolgt.

4. Das Verfahren gemäß irgendeinem der vorhergehenden Ansprüche, wobei
jede Signalqualitätsinformation (21) einer jeden mit der Basisstation (110) verbundenen Mobilfunkkommunikationsvorrichtung (200) eine Information bezüglich einer Signalqualität in einem Zeitintervall aufweist.

5. Das Verfahren gemäß Anspruch 4, wobei
das Zeitintervall für alle entsprechenden Mobilfunkkommunikationsvorrichtungen (200) identisch ist.

6. Das Verfahren gemäß irgendeinem der vorhergehenden Ansprüche, wobei
das Bereitstellen (10) der Signalqualitätskarte (11) für die Zelle der Basisstation (110) des Mobilfunksystems aufweist:

  - Ermitteln (15) der Signalqualitätskarte (11) basierend auf einem Gain eines Kanales des Mobilfunksystems und/oder basierend auf empfangenen Signalqualitätsinformationen (21) entsprechender mit der Basisstation (110) verbundener Mobilfunkkommunikationsvorrichtungen (200), jeweils in Abhängigkeit eines Ortes innerhalb der Zelle der Basisstation (110).

7. Das Verfahren irgendeinem der vorhergehenden Ansprüche 3 bis 6, das Verfahren ferner aufweisend:

  - Ermitteln (70) der Bewegungsrichtungsinformation (71) für jede mit der Basisstation (110) verbundene Mobilfunkkommunikationsvorrichtung (200), wobei

    - jede entsprechende Bewegungsrichtungsinformation (71) eine Information über eine Bewegungsrichtung der entsprechenden Mobilfunkkommunikationsvorrichtung (200) aufweist, und
    - das Ermitteln der Bewegungsrichtungsinformation (71) für jede mit der Basisstation (110) verbundene Mobilfunkkommunikationsvorrichtung (200), basierend auf der Signalqualitätskarte (11) erfolgt, und wobei

das Ermitteln von örtlich nahe beieinander befindlichen Mobilfunkkommunikationsvorrichtungen (200), zusätzlich basierend auf den ermittelten Bewegungsrichtungsinformation (71) erfolgt.

8. Das Verfahren gemäß irgendeinem der vorhergehenden Ansprüche 3 bis 7, das Verfahren ferner aufweisend:

  - Ermitteln (80) der Bewegungsgeschwindigkeitsinformation (81) für jede mit der Basisstation (110) verbundene Mobilfunkkommunikationsvorrichtung (200), wobei jede entsprechende Bewegungsgeschwindigkeitsinformation (81) eine Information über eine Bewegungsgeschwindigkeit der entsprechenden Mobilfunkkommunikationsvorrichtung (200) aufweist, und wobei

das Ermitteln der Bewegungsgeschwindigkeitsinformation (81) für jede mit der Basisstation verbundene Mobilfunkkommunikationsvorrichtung, basierend auf einer entsprechenden Dopplerverschiebung, eines von der entsprechenden Mobilfunkkommunikationsvorrichtung gesendeten entsprechenden Signales an die Basisstation, erfolgt.

9. Ein System (100) zur Erkennung einer Staugrenze im Straßenverkehr, das System aufweisend:

  - Eine Basisstation (110) eines Mobilfunksystems,
  - eine Signalmessvorrichtung (120), und
  - eine Signalanalysevorrichtung (130), wobei die Basisstation (110) dazu eingerichtet ist, mit der Basisstation (110) verbundene Mobilfunkkommunikationsvorrichtungen (200) zu betreuen und zumindest einen Teil eines an die Basisstation (110) übermittelten Signales an die Signalmessvorrichtung (120) zu übertragen,
  die Signalmessvorrichtung (120) dazu eingerichtet ist,

    - eine Signalqualität eines an die Basisstation (110) übermittelten Signales zu ermitteln, und
    - die ermittelte Signalqualität an die Signalanalysevorrichtung (130) zu übertragen, und wobei

  die Signalanalysevorrichtung (130) dazu eingerichtet ist,
  ein Verfahren gemäß irgendeinem der vorhergehenden Ansprüche auszuführen.

10. Das System gemäß Anspruch 9, das System ferner aufweisend:

  - Eine Geschwindigkeitsermittlungsvorrichtung (140), zur Ermittlung einer Bewegungsgeschwindigkeit, für jede mit der Basisstation (110) verbundene Mobilfunkkommunikationsvorrichtung (200).

**11.** Eine Basisstation (110) für ein Mobilfunksystem, die Basisstation (110) aufweisend:

- Eine Signalmessvorrichtung (112), und
- eine Signalanalysevorrichtung (113), wobei die Signalmessvorrichtung (112) dazu eingerichtet ist,
- eine Signalqualität eines an die Basisstation (110) übermittelten Signales zu ermitteln, und
- die ermittelte Signalqualität an die Signalanalysevorrichtung (113) zu übertragen, und wobei

die Signalanalysevorrichtung (113) dazu eingerichtet ist, ein Verfahren gemäß irgendeinem der vorhergehenden Ansprüche 1 bis 9 auszuführen.

**12.** Die Basisstation (110) gemäß Anspruch 11, die Basisstation (110) ferner aufweisend:

- Eine Geschwindigkeitsermittlungsvorrichtung (114), zur Ermittlung einer Bewegungsgeschwindigkeit, für jede mit der Basisstation (110) verbundene Mobilfunkkommunikationsvorrichtung (200).

**13.** Ein Computerprogrammprodukt für ein System gemäß Anspruch 9 oder 10 und/oder für eine Basisstation (110) gemäß Anspruch 11 oder 12, wobei das System und/oder die Basisstation (110) jeweils nach einem Verfahren gemäß irgendeinem der Ansprüche 1 bis 8 betreibbar ist.

**14.** Ein Datenträger aufweisend ein Computerprogrammprodukt gemäß Anspruch 13.

**Claims**

**1.** Method for determining a tailback limit in road traffic, the method exhibiting:

- providing (10) a signal quality map (11) for a cell of a base station (110) of a mobile radio system, the signal quality map (11) having overview information about signal qualities occurring within the cell,
- determining (20) signal quality information (21) for each mobile radio communication device (200) connected to the base station (110),
- determining (30) a probability density function (31) based on the corresponding signal quality information (21) determined,
- determining (40) a position (32) of the probability density function (31) having a function gradient which corresponds to an angular amount of at least 75° with respect to a horizontal function axis (X) of the probability density function, preferably an angular amount between 80° and 90°, especially preferably an angular amount between 85° and 90°, the position (32) being indicative of a tailback limit in the cell of the base station, and
- determining (50) a location (51) of the tailback limit based on the position (32) determined and the signal quality map (11).

**2.** Method according to Claim 1, wherein the determining of the signal quality information (21) takes place for each mobile radio communication device (200) connected to the base station (110), based on a corresponding Reference Signal Receive Power and/or based on a corresponding Sounding Reference Signal of the corresponding mobile radio communication device (200).

**3.** Method according to Claim 1 or 2, the method also exhibiting:

- determining (60) mobile radio communication devices (200) located in the tailback (61), based on a selection from a tailback determining group, the tailback determining group exhibiting:

- the signal quality information (21) determined,
- the signal quality map (11) provided,
- direction-of-movement information (71) for each mobile radio communication device (200) connected to the base station (110), and
- speed-of-movement information (81) for each mobile radio communication device (200) connected to the base station (110), and

wherein the determining (30) of the probability density function (31) takes place based on the mobile radio communication devices (200) located in the tailback (61).

**4.** Method according to any of the preceding claims, wherein each signal quality information item (21) of each mobile radio communication device (200) connected to the base station (110) has information with respect to a signal quality in a time interval.

**5.** Method according to Claim 4, wherein the time interval is identical for all corresponding mobile radio communication devices (200).

**6.** Method according to any of the preceding claims, wherein the providing (10) of the signal quality map (11) for the cell of the base station (110) of the mobile radio system exhibits:

- determining (15) the signal quality map (11) based on a gain of a channel of the mobile radio system and/or based on received signal quality information (21) of corresponding mobile radio communication devices (200) connected to the base station (110), in each case in dependence on a location within the cell of the base station (110).

7. Method according to any of the preceding Claims 3 to 6, the method also exhibiting:

- determining (70) the direction-of-movement information (71) for each mobile radio communication device (200) connected to the base station (110), wherein

- each corresponding direction-of-movement information item (71) exhibits information about a direction of movement of the corresponding mobile radio communication device (200), and
- the determining of the direction-of-movement information (71) takes place for each mobile radio communication device (200) connected to the base station (110) based on the signal quality map (11), and wherein

the determining of mobile radio communication devices (200) located close to one another locally additionally takes place based on the direction-of-movement information (71) determined.

8. Method according to any of the preceding Claims 3 to 7, the method also exhibiting:

- determining (80) the speed-of-movement information (81) for each mobile radio communication device (200) connected to the base station (110), wherein each corresponding speed-of-movement information item (81) exhibits information about a speed of movement of the corresponding mobile radio communication device (200), and wherein

the determining of the speed-of-movement information (81) for each mobile radio communication device connected to the base station takes place based on a corresponding Doppler shift of a corresponding signal sent by the corresponding mobile radio communication device to the base station.

9. System (100) for detecting a tailback limit in road traffic, the system exhibiting:

- a base station (110) of a mobile radio system,
- a signal measuring device (120), and
- a signal analysing device (130), wherein

the base station (110) is configured to manage mobile radio communication devices (200) connected to the base station (110) and to transmit at least one part of a signal conveyed to the base station (110) to the signal measuring device (120), the signal measuring device (120) is configured

- to determine a signal quality of a signal conveyed to the base station (110), and
- to transmit the signal quality determined to the signal analysing device (130), and wherein

the signal analysing device (130) is configured to carry out a method according to any of the preceding claims.

10. System according to Claim 9, the system also exhibiting:

- a speed-determining device (140) for determining a speed of movement for each mobile radio communication device (200) connected to the base station (110).

11. Base station (110) for a mobile radio system, the base station (110) exhibiting:

- a signal measuring device (112), and
- a signal analysing device (113), wherein the signal measuring device (112) is configured

- to determine a signal quality of a signal conveyed to the base station (110), and
- to transmit the signal quality determined to the signal analysing device (113), and wherein

the signal analysing device (113) is configured to carry out a method according to any of the preceding Claims 1 to 9.

12. Base station (110) according to Claim 11, the base station (110) also exhibiting:

- a speed-determining device (114) for determining a speed of movement for each mobile radio communication device (200) connected to the base station (110).

13. Computer program product for a system according to Claim 9 or 10 and/or for a base station (110) according to Claim 11 or 12, the system and/or the base station (110) being operable in each case according to a method according to any of Claims 1 to 8.

14. Data storage medium exhibiting a computer program product according to Claim 13.

## Revendications

1. Procédé de détermination d'une limite d'embouteillage dans une circulation routière, le procédé comprenant :

   - fourniture (10) d'une carte de qualité de signal (11) pour une cellule d'une station de base (110) d'un système de radiocommunication mobile, la carte de qualité de signal (11) possédant une information d'ensemble à propos des qualités de signal qui se produisent à l'intérieur de la cellule,
   - détermination (20) d'une information de qualité de signal (21) pour chaque dispositif de radiocommunication mobile (200) connecté à la station de base (110),
   - détermination (30) d'une fonction de densité de probabilité (31), basée sur l'information de qualité de signal (21) correspondante déterminée,
   - détermination (40) d'un point (32) de la fonction de densité de probabilité (31) ayant un gradient de fonction qui correspond à un angle de valeur absolue d'au moins 75° en référence à un axe de fonction horizontal (X) fonction de densité de probabilité, de préférence un angle de valeur absolue compris entre 80° et 90°, notamment de préférence un angle de valeur absolue entre 85° et 90°, le point (32) étant indicatif pour une limite d'embouteillage dans la cellule de la station de base, et
   - détermination (50) d'un lieu (51) de la limite d'embouteillage en se basant sur le point (32) déterminé et la carte de qualité de signal (11).

2. Procédé selon la revendication 1, la détermination de l'information de qualité de signal (21) pour chaque dispositif de radiocommunication mobile (200) connecté à la station de base (110) s'effectuant en se basant sur une puissance de réception de signal de référence correspondante et/ou en se basant sur un signal de référence de sondage correspondant du dispositif de radiocommunication mobile (200) correspondant.

3. Procédé selon la revendication 1 ou 2, le procédé comprenant en outre :

   - détermination (60) des dispositifs de radiocommunication mobile (200) qui se trouvent dans l'embouteillage (61) en se basant sur une sélection d'un groupe de détermination d'embouteillage, le groupe de détermination d'embouteillage comprenant :
   - les informations de qualité de signal (21) déterminées,
   - la carte de qualité de signal (11) fournie,
   - une information de direction de mouvement (71) pour chaque dispositif de radiocommunication mobile (200) connecté à la station de base (110) et
   - une information de vitesse de mouvement (81) pour chaque dispositif de radiocommunication mobile (200) connecté à la station de base (110) et

   la détermination (30) de la fonction de densité de probabilité (31) s'effectuant en se basant sur les dispositifs de radiocommunication mobile (200) qui se trouvent dans l'embouteillage (61).

4. Procédé selon l'une quelconque des revendications précédentes, chaque information de qualité de signal (21) de chaque dispositif de radiocommunication mobile (200) connecté à la station de base (110) possédant une information à propos d'une qualité de signal dans un intervalle de temps.

5. Procédé selon la revendication 4, l'intervalle de temps étant identique pour tous les dispositifs de radiocommunication mobile (200).

6. Procédé selon l'une quelconque des revendications précédentes,
   la fourniture (10) de la carte de qualité de signal (11) pour la cellule de la station de base (110) du système de radiocommunication mobile comprenant :

   - détermination (15) de la carte de qualité de signal (11) en se basant sur un gain d'un canal du système de radiocommunication mobile et/ou en se basant sur les informations de qualité de signal (21) reçues des dispositifs de radiocommunication mobile (200) correspondants connectés à la station de base (110), respectivement en dépendance d'un lieu à l'intérieur de la cellule de la station de base (110).

7. Procédé selon l'une quelconque des revendications précédentes 3 à 6, le procédé comprenant en outre :

   - détermination (70) de l'information de direction de mouvement (71) pour chaque dispositif de radiocommunication mobile (200) connecté à la station de base (110),
   - chaque information de direction de mouvement (71) correspondante comprenant une information à propos d'une direction de mouvement du dispositif de radiocommunication mobile (200) correspondant, et
   - la détermination de l'information de direction de mouvement (71) pour chaque dispositif de radiocommunication mobile (200) connecté à la station de base (110) s'effectuant en se basant sur la carte de qualité de signal (11), et

EP 3 338 262 B1

la détermination de dispositifs de radiocommunication mobile (200) qui se trouvent localement proches les uns des autres s'effectuant en plus en se basant sur l'information de direction de mouvement (71) déterminée.

8. Procédé selon l'une quelconque des revendications précédentes 3 à 7, le procédé comprenant en outre :

 - détermination (80) de l'information de vitesse de mouvement (81) pour chaque dispositif de radiocommunication mobile (200) connecté à la station de base (110), chaque information de vitesse de mouvement (81) correspondante comprenant une information à propos d'une vitesse de mouvement du dispositif de radiocommunication mobile (200) correspondant, et

 la détermination de l'information de vitesse de mouvement (81) pour chaque dispositif de radiocommunication mobile connecté à la station de base s'effectuant en se basant sur un décalage Doppler correspondant d'un signal correspondant envoyé à la station de base par le dispositif de radiocommunication mobile correspondant.

9. Système (100) de reconnaissance d'une limite d'embouteillage dans la circulation routière, le système comprenant :

 - une station de base (110) d'un système de radiocommunication mobile
 - un dispositif de mesure de signal (120), et
 - un dispositif d'analyse de signal (130),
 la station de base (110) étant conçue pour desservir les dispositifs de radiocommunication mobile (200) connectés à la station de base (110) et transmettre au dispositif de mesure de signal (120) au moins une partie des signaux communiqués à la station de base (110),
 le dispositif de mesure de signal (120) étant conçu pour

 - déterminer une qualité de signal du signal communiqué à la station de base (110) et
 - transmettre la qualité de signal déterminée au dispositif d'analyse de signal (130) et

 le dispositif d'analyse de signal (130) étant conçu pour mettre en œuvre un procédé selon l'une quelconque des revendications précédentes.

10. Système selon la revendication 9, le système comprenant en outre :

 - un dispositif de détermination de vitesse (140) destiné à déterminer une vitesse de mouvement pour chaque dispositif de radiocommunication mobile (200) connecté à la station de base (110).

11. Station de base (110) pour un système de radiocommunication mobile, la station de base (110) comprenant :

 - un dispositif de mesure de signal (112), et
 - un dispositif d'analyse de signal (113),
 le dispositif de mesure de signal (112) étant conçu pour

 - déterminer une qualité de signal du signal communiqué à la station de base (110) et
 - transmettre la qualité de signal déterminée au dispositif d'analyse de signal (113) et

 le dispositif d'analyse de signal (113) étant conçu pour mettre en œuvre un procédé selon l'une quelconque des revendications précédentes 1 à 9.

12. Station de base (110) selon la revendication 11, la station de base (110) comprenant en outre :

 - un dispositif de détermination de vitesse (114) destiné à déterminer une vitesse de mouvement pour chaque dispositif de radiocommunication mobile (200) connecté à la station de base (110).

13. Produit de programme informatique pour un système selon la revendication 9 ou 10 et/ou pour une station de base (110) selon la revendication 11 ou 12, le système et/ou la station de base (110) pouvant respectivement fonctionner conformément à un procédé selon l'une quelconque des revendications 1 à 8.

14. Support de données comprenant un produit de programme informatique selon la revendication 13.

Fig. 1

Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009047097 A1